# EUROPEAN PATENT APPLICATION

(11) **EP 2 428 535 A1**
(43) Date of publication of application: **14.03.2012**
(21) Application number: 10772185.4
(22) Date of filing: 06.05.2010
(51) Int. Cl.: C08L 79/08, C08G 73/10, C08K 5/3415, C09J 179/08

(54) **THERMOSETTING POLYIMIDE RESIN COMPOSITION, CURED PRODUCT, AND ADHESIVE**

(30) Priority: 08.05.2009 JP 2009113624
(71) Applicant: Mitsubishi Gas Chemical Company, Inc., Tokyo 100-8324 (JP)
(72) Inventor: BITO, Tsuyoshi, Hiratsuka-shi Kanagawa 254-0016 (JP); OISHI, Jitsuo, Tokyo 100-8324 (JP); KIHARA, Shuta, Hiratsuka-shi Kanagawa 254-0016 (JP)
(74) Representative: HOFFMANN EITLE
(86) International application number: PCT/JP2010/057778
(87) International publication number: WO 2010/128667

(57) **Abstract**

To provide a thermosetting polyimide resin composition that can provide a cured product which generates a small amount of decomposition gas even when exposed to, for example, a high-temperature environment of about 250°C, and which exhibits high heat resistance, high durability, favorable flexibility, and favorable adhesive property; a cured product produced from the thermosetting polyimide resin composition; and an adhesive produced from the thermosetting polyimide resin composition. The thermosetting polyimide resin composition containing (a) a polyimide produced through reaction between a tetracarboxylic acid component containing a tetracarboxylic dianhydride and/or a tetracarboxylic acid, and a diamine; and (b) a maleimide composition containing at least one polymaleimide compound represented by any of formulas (4-1) to (4-3).

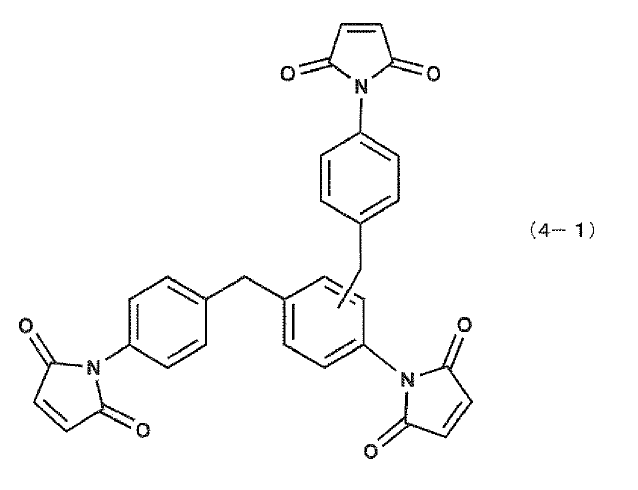

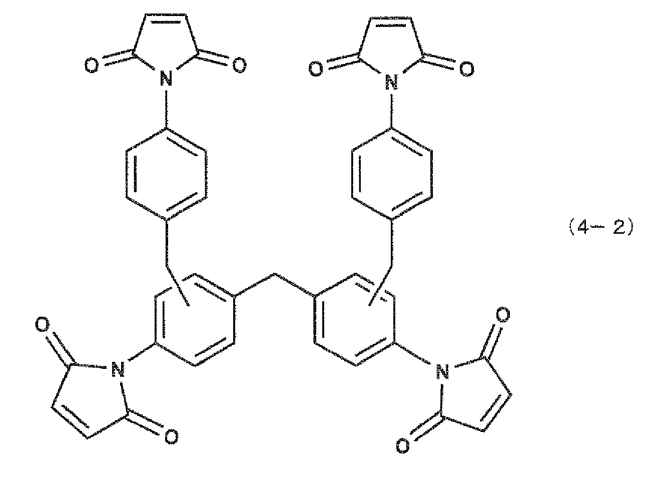

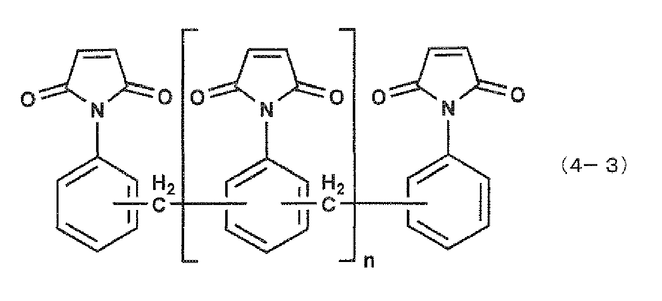

## Description

### Technical Field

The present invention relates to a thermosetting polyimide resin composition which can provide a cured product exhibiting high heat resistance, high durability, favorable flexibility, and favorable adhesive property; to a cured product produced from the thermosetting polyimide resin composition; and to an adhesive produced from the thermosetting polyimide resin composition.

### Background Art

Hitherto, fluorine-containing adhesives or silicone adhesives have been well known to exhibit heat resistance to a temperature of 200°C or higher. However, fluorine-containing adhesives are very expensive, although they are most excellent in terms of heat resistance. Meanwhile, silicone adhesives pose a problem in that when exposed to a high-temperature environment of about 250°C for a long period of time, they may generate siloxane gas, causing insulation failure, although they are inexpensive and exhibit excellent heat resistance, and thus are used in a wide variety of fields. Conventionally used silicone adhesives include a peroxide-curable type and an addition-reaction-curable type. For example, a peroxide-curable silicone adhesive contains, as a curing agent, an organic peroxide such as benzoyl peroxide. However, this type of silicone adhesive poses a problem in that the adhesive is difficult to apply to a base having a low heat-resistance temperature, since the adhesive requires a high temperature of 150°C or higher for curing.

Meanwhile, an addition-reaction-curable silicone adhesive involves cross-linking through addition reaction between an SiH group and an alkenyl group in the presence of a platinum catalyst (see, for example, Patent Document 1). Such a silicone adhesive realizes curing at low temperature, and thus is suitable for application to a base having low heat resistance. However, this type of adhesive poses problems in that when a treatment liquid is prepared from the adhesive, even before the liquid is applied to a substrate, addition reaction gradually proceeds in the liquid, or the amount of SiH groups of a cross-linking agent is reduced through consumption thereof, and therefore the adhesive undergoes a change in adhesive property, as well as an increase in viscosity or gelation may occur in the treatment liquid over time, or the adhesive may be insufficiently cured or may failed to be cured.

Market demand has arisen for a heat-resistant adhesive which does not degrade at a temperature as high as 250°C and which can be produced at low cost, as compared with the case of a fluorine-containing adhesive. However, there has not yet been provided an adhesive which satisfactorily meets such demand. In some cases, the viscosity of an adhesive solution is required to be high, depending on the apparatus or method employed for applying the solution to an object. Also, in some cases, the thickness of a layer formed of an adhesive is required to be relatively large, depending on the intended use of the adhesive. From the viewpoints of both high viscosity of an adhesive solution and large thickness of a layer of the adhesive, desirably, the adhesive solution employed has a higher adhesive content.

### Prior Art Document

### Patent Document

Patent Document 1: Japanese Patent Publication (*kokoku*) No. S54-37907

### Summary of the Invention

### Problems to be Solved by the Invention

In view of the foregoing, an object of the present invention is to provide a thermosetting polyimide resin composition that can provide a cured product which generates a small amount of decomposition gas even when exposed to, for example, a high-temperature environment of about 250°C, and which exhibits high heat resistance, high durability, favorable flexibility, and favorable adhesive property. Another object of the present invention is to provide a cured product produced from the thermosetting polyimide resin composition. Yet another object of the present invention is to provide an adhesive produced from the thermosetting polyimide resin composition.

### Means for Solving the Problems

In order to solve the aforementioned problems, the present inventors have conducted extensive studies, and as a result have found that a uniform solution of a thermosetting polyimide resin composition, the resin composition containing a specific polyimide and a maleimide composition containing a specific polymaleimide compound, can be prepared by dissolving the resin composition in only a small amount of a solvent, and therefore the resultant solution contains the resin composition at a high concentration (e.g., solid content: about 80 mass%). Also, the present inventors have found that, since preparation of the solution requires a small amount of a solvent having a low boiling point (e.g., 150°C or lower, preferably 100°C or lower), the resin composition can be cured (cross-linked) at low temperature. Also, the present inventors have found that, even when a cured product produced from the thermosetting polyimide resin composition is heated to 250°C, the cured product generates a small amount of decomposition gas, and that the cured product exhibits high heat resistance, high durability, favorable flexibility, and favorable adhesive property. The present invention has been accomplished on the basis of these findings.

Accordingly, the present invention provides the following [1] to [10].
[1] A thermosetting polyimide resin composition comprising the following components (a) and (b):
   (a) a polyimide produced through reaction between a tetracarboxylic acid component containing a tetracarboxylic dianhydride represented by the following formula (1): 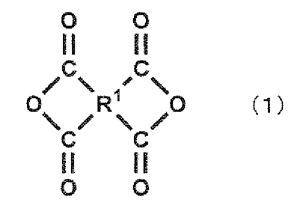 (wherein R¹ represents a C1 to C20 tetravalent chain saturated hydrocarbon group, a C2 to C20 tetravalent chain unsaturated aliphatic hydrocarbon group, a C4 to C20 tetravalent alicyclic hydrocarbon group, a C6 to C15 tetravalent aromatic hydrocarbon group, or a C13 to C20 substituted or unsubstituted aromatic-ring-containing chain saturated hydrocarbon group) and/or a tetracarboxylic acid represented by the following formula (2): 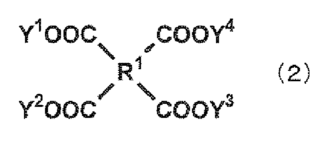 (wherein R¹ has the same meaning as defined above; and each of Y¹ to Y⁴ represents a hydrogen atom or a C1 to C8 aliphatic hydrocarbon group), and a diamine represented by the following formula (3):

      H₂N-X¹-NH₂ (3)

      (wherein X¹ represents a C1 to C221 divalent organic group which is formed of an aliphatic hydrocarbon group, an alicyclic hydrocarbon group, an aromatic hydrocarbon group, or a combination thereof, and which optionally includes an ether group, a sulfonyl group, or a keto group in the structure thereof); and
   (b) a maleimide composition containing at least one polymaleimide compound represented by any of the following formulas (4-1) to (4-3): 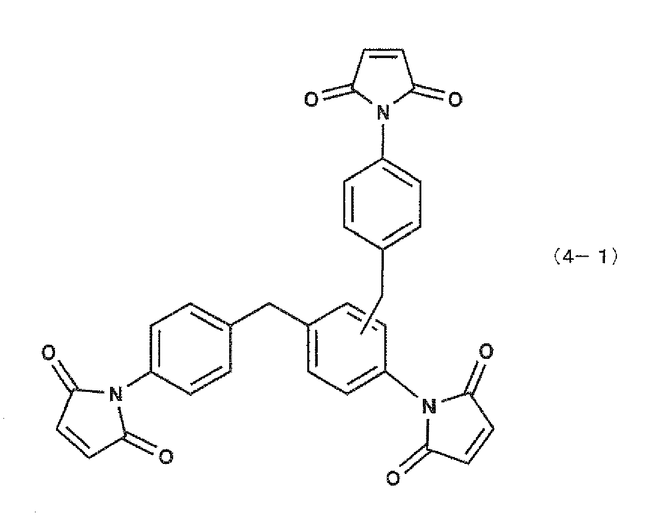 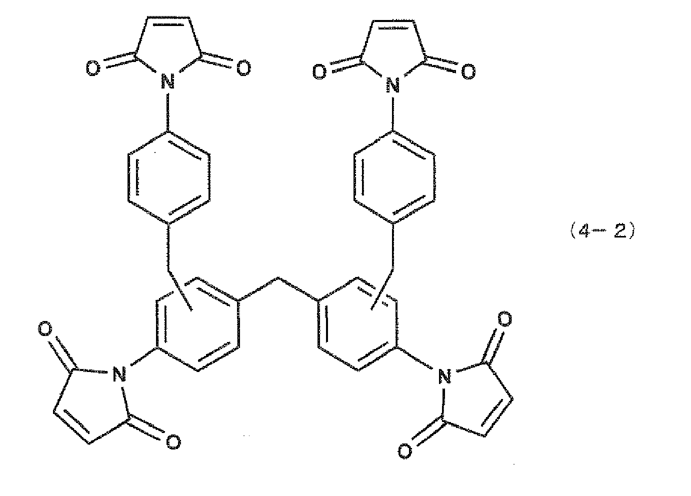 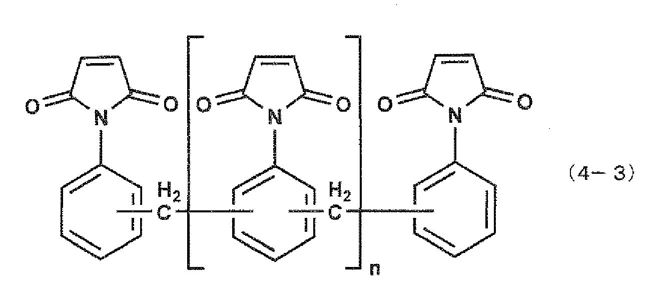 (wherein n is an integer from 1 to 10).
[2] The thermosetting polyimide resin composition according to [1] above, wherein the polyimide has been produced through reaction under such a condition that the amount by mole of the diamine exceeds that of the tetracarboxylic acid component.
[3] The thermosetting polyimide resin composition according to [1] or [2] above, wherein the amount of component (b) is 1 to 200 parts by mass on the basis of 100 parts by mass of component (a).
[4] The thermosetting polyimide resin composition according to any of [1] to [3] above, wherein component (b) is a maleimide composition containing at least one polymaleimide compound represented by any of formulas (4-1) to (4-3) and a bismaleimide compound.
[5] The thermosetting polyimide resin composition according to any of [1] to [4] above, wherein the amount of the polymaleimide compound is 1 to 50 mass% with respect to the entire amount of the maleimide composition.
[6] The thermosetting polyimide resin composition according to any of [1] to [5] above, wherein the organic group represented by X¹ in formula (3) has at least one polyoxyalkylene group selected from among a polyoxyethylene group, a polyoxypropylene group, and a polyoxybutylene group.
[7] The thermosetting polyimide resin composition according to any of [1] to [6] above, which further contains a solvent.
[8] The thermosetting polyimide resin composition according to [7] above, which has a nonvolatile content of 65 to 90 mass%.
[9] A cured product produced through thermal cross-linking of a thermosetting polyimide resin composition as recited in any of [1] to [8] above at 150 to 260°C for 0.1 to 12 hours.
[10] An adhesive produced through thermal cross-linking of a thermosetting polyimide resin composition as recited in any of [1] to [8] above at 150 to 260°C for 0.1 to 12 hours.

### Effects of the Invention

The thermosetting polyimide resin composition of the present invention can incorporate a solvent having a low boiling point (e.g., 150°C or lower, preferably 100°C or lower), such as 1,3-dioxolane or tetrahydrofuran, and realizes preparation of a high-concentration solution (e.g., a nonvolatile content of 65 to 90 mass%). Therefore, the thermosetting polyimide resin composition is subjected to a curing process, the drying time can be shortened, to thereby realize an efficient process. Also, the thermosetting polyimide resin composition is excellent in terms of safety and health, since the amount of a solvent discharged during drying can be reduced.
In addition, the cured product produced from the thermosetting polyimide resin composition exhibits well-balanced properties as an adhesive. For example, the cured product generates a small amount of decomposition gas even when heated to 250°C, and exhibits high heat resistance, high durability, favorable flexibility, and favorable adhesive property.

### Best Modes for Carrying Out the Invention

The present invention will next be described in detail.
The present invention is directed to a thermosetting polyimide resin composition containing (a) a polyimide produced through reaction between a tetracarboxylic acid component containing a tetracarboxylic dianhydride represented by the following formula (1) and/or a tetracarboxylic acid represented by the following formula (2) and a diamine represented by the following formula (3); and (b) a maleimide composition containing at least one polymaleimide compound represented by any of the following formulas (4-1) to (4-3). The thermosetting polyimide resin composition exhibits high heat resistance, high durability, favorable flexibility, and favorable adhesive property.
As used herein, the expression "adhesive property of a cured product" refers to the case where the cured product adheres to an object solely through application of low pressure at ambient temperature for a short period of time without employment of, for example, water, a solvent, or heat. Also, as used herein, the expression "adhesive force of a cured product" refers to a force required for separating a test piece from the cured product after they have been caused to adhere to each other through application of low pressure at ambient temperature for a short period of time. 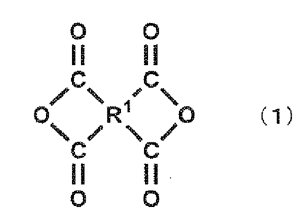 (In formula (1), R¹ represents a C1 to C20 tetravalent chain saturated hydrocarbon group, a C2 to C20 tetravalent chain unsaturated aliphatic hydrocarbon group, a C4 to C20 tetravalent alicyclic hydrocarbon group, a C6 to C15 tetravalent aromatic hydrocarbon group, or a C13 to C20 substituted or unsubstituted aromatic-ring-containing chain saturated hydrocarbon group.) 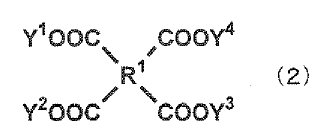 (In formula (2), R¹ has the same meaning as defined above; and each of Y¹ to Y⁴ represents a hydrogen atom or a C1 to C8 aliphatic hydrocarbon group.)

H₂N-X¹-NH₂ (3)

(In formula (3), X¹ represents a C1 to C221 divalent organic group which is formed of an aliphatic hydrocarbon group, an alicyclic hydrocarbon group, an aromatic hydrocarbon group, or a combination thereof, and which optionally includes an ether group, a sulfonyl group, or a keto group in the structure thereof.)

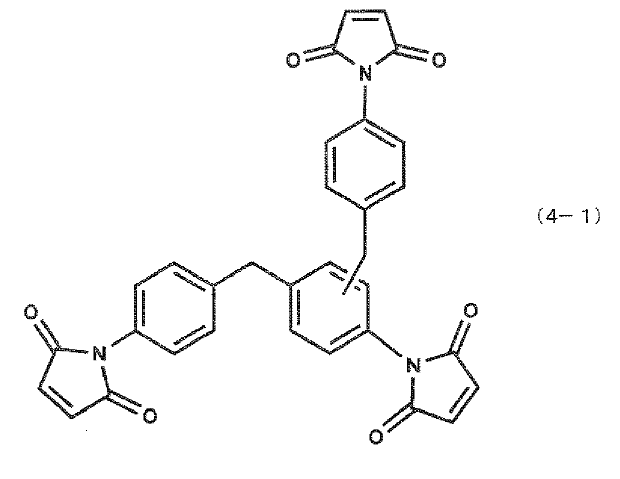

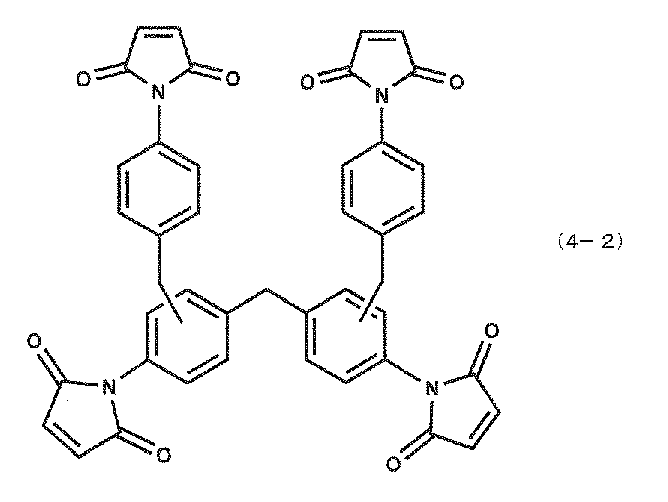

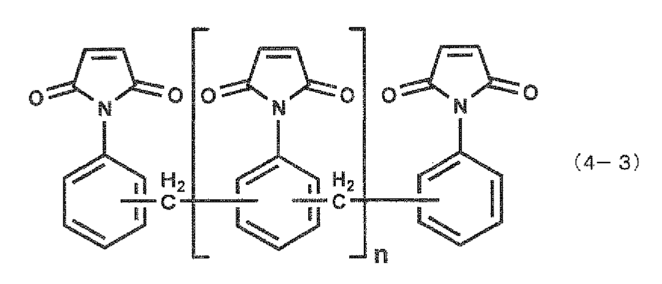

(In formula (4-3), n is an integer from 1 to 10.)

Generally, a tetracarboxylic dianhydride is employed as a raw material for production of a polyimide. In the present invention, as described above, a polyimide suitable for practical use may be produced from, instead of a tetracarboxylic dianhydride, for example, a tetracarboxylic acid or a tetracarboxylic acid tetraester.

### (Tetracarboxylic acid component)

In formula (1) or (2), R¹ represents a C1 to C20 tetravalent chain saturated hydrocarbon group, a C2 to C20 tetravalent chain unsaturated aliphatic hydrocarbon group, a C4 to C20 tetravalent alicyclic hydrocarbon group, a C6 to C15 tetravalent aromatic hydrocarbon group, or a C13 to C20 substituted or unsubstituted aromatic-ring-containing chain saturated hydrocarbon group.
Examples of the C1 to C20 tetravalent chain saturated hydrocarbon group represented by R¹ include a butanetetrayl group, a hexanetetrayl group, and an octanetetrayl group. Of these, a C3 to C10 tetravalent chain saturated hydrocarbon group is preferred, and a C3 to C8 tetravalent chain saturated hydrocarbon group is more preferred, from the viewpoints of the heat resistance, durability, flexibility, and adhesive property of the cured product.
Examples of the C2 to C20 tetravalent chain unsaturated aliphatic hydrocarbon group represented by R¹ include an ethylenetetrayl group, a butenetetrayl group, a hexenetetrayl group, and an octenetetrayl group. Of these, a C3 to C10 tetravalent chain unsaturated aliphatic hydrocarbon group is preferred, and a C3 to C8 tetravalent chain unsaturated hydrocarbon group is more preferred, from the viewpoints of the heat resistance, durability, flexibility, and adhesive property of the cured product.
Examples of the a C4 to C20 tetravalent alicyclic hydrocarbon group represented by R¹ include a cyclobutanetetrayl group, a cyclopentanetetrayl group, a methylcyclopentanetetrayl group, a cyclohexanetetrayl group, a cyclopentanetetrayl group, a dicyclohexanetetrayl group, and a bicyclo[2.2.2]oct-7-ene-tetrayl group. Of these, a C4 to C10 tetravalent alicyclic hydrocarbon group is preferred, and a cyclohexanetetrayl group is more preferred, from the viewpoints of the heat resistance, durability, flexibility, and adhesive property of the cured product.

Examples of the C6 to C15 tetravalent aromatic hydrocarbon group represented by R¹ include a benzenetetrayl group and a biphenyltetrayl group. Of these, a C6 to C10 tetravalent aromatic hydrocarbon group is preferred, from the viewpoints of the heat resistance, durability, flexibility, and adhesive property of the cured product. Examples of the C13 to C20 aromatic-ring-containing chain saturated hydrocarbon group represented by R¹ include a diphenylmethanetetrayl group, a diphenylethanetetrayl group, and a diphenylpropanetetrayl group. The aromatic-ring-containing chain saturated hydrocarbon group may be substituted by a substitutent such as a halogen atom (e.g., a fluorine atom) or an oxygen atom (=O). In the aromatic-ring-containing chain saturated hydrocarbon group, a certain carbon atom may be replaced with an oxygen atom (-O-) to form an ether bond, or a certain carbon atom may be replaced with -S(=O)₂- to form a sulfonyl group.
Among the aforementioned examples of R¹, a C4 to C20 tetravalent alicyclic hydrocarbon group is preferred, from the viewpoints of the heat resistance, durability, flexibility, and adhesive property of the cured product. More preferred examples are as described above.

In formula (2), each of Y¹ to Y⁴ represents a hydrogen atom or a C1 to C8 aliphatic hydrocarbon group.
Examples of the C1 to C8 aliphatic hydrocarbon group represented by each of Y¹ to Y⁴ include a methyl group, an ethyl group, an n-propyl group, an isopropyl group, various butyl groups (the term "various" includes a linear-chain form and all branched-chain forms), various hexyl groups, and various octyl groups.
A tetracarboxylic acid of formula (2) in which at least one of Y¹ to Y⁴ is a C1 to C8 aliphatic hydrocarbon group may be formed through reaction between the corresponding tetracarboxylic acid and a C1 to C8 alcohol.

Specific examples of the tetracarboxylic dianhydride of formula (1) employed in the present invention include an aliphatic tetracarboxylic dianhydride and an aromatic tetracarboxylic dianhydride.
Examples of the aliphatic tetracarboxylic dianhydride include ethylenetetracarboxylic dianhydride, 1,2,4,5-cyclohexanetetracarboxylic dianhydride, 1,2,3,4-butanetetracarboxylic dianhydride, 1,2,3,4-cyclobutanetetracarboxylic dianhydride, 1,2,3,4-cyclopentanetetracarboxylic dianhydride, 3-carboxymethyl-1,2,4-cyclopentanetricarboxylic dianhydride, bicyclo[2.2.2]oct-7-ene-2,3,5,6-tetracarboxylic dianhydride, and dicyclohexyltetracarboxylic dianhydride.
Examples of the aromatic tetracarboxylic dianhydride include pyromellitic dianhydride, 3,3',4,4'-biphenyltetracarboxylic dianhydride, 2,3,3',4'-biphenyltetracarboxylic dianhydride, 2,2-bis(3,4-dicarboxyphenyl)propane dianhydride, 2,2-bis(2,3-dicarboxyphenyl)propane dianhydride, 2,2-bis(3,4-dicarboxyphenyl)-1,1,1,3,3,3-hexafluoropropane dianhydride, 2,2-bis(2,3-dicarboxyphenyl)-1,1,1,3,3,3-hexafluoropropane dianhydride, bis(3,4-dicarboxyphenyl) sulfone dianhydride, bis(3,4-dicarboxyphenyl) ether dianhydride, bis(2,3-dicarboxyphenyl) ether dianhydride, 3,3',4,4'-benzophenonetetracarboxylic dianhydride, 2,2',3,3'-benzophenonetetracarboxylic dianhydride, 4,4'-(p-phenylenedioxy)diphthalic dianhydride, 4,4'-(m-phenylenedioxy)diphthalic dianhydride, 1,1-bis(2,3-dicarboxyphenyl)ethane dianhydride, bis(2,3-dicarboxyphenyl)methane dianhydride, and bis(3,4-dicarboxyphenyl)methane dianhydride.

Specific examples of the tetracarboxylic acid of formula (2) employed in the present invention include an aliphatic tetracarboxylic acid and an aromatic tetracarboxylic acid.
Examples of the aliphatic tetracarboxylic acid include 1,2,4,5-cyclohexanetetracarboxylic acid, 1,2,3,4-butanetetracarboxylic acid, 1,2,3,4-cyclobutanetetracarboxylic acid, 1,2,3,4-cyclopentanetetracarboxylic acid, bicyclo[2.2.2]oct-7-ene-2,3,5,6-tetracarboxylic acid, and dicyclohexyltetracarboxylic acid, and an ester formed through reaction between such a carboxylic compound and a C1 to C8 alcohol.
Examples of the aromatic tetracarboxylic acid include pyromellitic acid, 3,3',4,4'-biphenyltetracarboxylic acid, 2,3,3',4'-biphenyltetracarboxylic acid, 2,2-bis(3,4-dicarboxyphenyl)propane, 2,2-bis(2,3-dicarboxyphenyl)propane, 2,2-bis(3,4-dicarboxyphenyl)-1,1,1,3,3,3-hexafluoropropane, 2,2-bis(2,3-dicarboxyphenyl)-1,1,1,3,3,3-hexafluoropropane, bis(3,4-dicarboxyphenyl) sulfone, bis(3,4-dicarboxyphenyl) ether, bis(2,3-dicarboxyphenyl) ether, 3,3',4,4'-benzophenonetetracarboxylic acid, 2,2',3,3'-benzophenonetetracarboxylic acid, 4,4'-(p-phenylenedioxy)diphthalic acid, 4,4'-(m-phenylenedioxy)diphthalic acid, ethylenetetracarboxylic acid, 3-carboxymethyl-1,2,4-cyclopentanetricarboxylic acid, 1,1-bis(2,3-dicarboxyphenyl)ethane, bis(2,3-dicarboxyphenyl)methane, and bis(3,4-dicarboxyphenyl)methane, and an ester formed through reaction between such a carboxylic compound and a C1 to C8 alcohol.

Among the aforementioned tetracarboxylic acid components, a compound having a structure derived from cyclohexane or benzene is preferred, a compound having a structure derived from cyclohexane is more preferred, and 1,2,4,5-cyclohexanetetracarboxylic dianhydride or 1,2,4,5-cyclohexanetetracarboxylic acid is much more preferred.
These tetracarboxylic acids may be employed singly or in combination of two or more species.

### (Diamine)

In formula (3), X¹ represents a C1 to C221 divalent organic group which is formed of an aliphatic hydrocarbon group, an alicyclic hydrocarbon group, an aromatic hydrocarbon group, or a combination thereof, and which optionally includes an ether group, a sulfonyl group, or a keto group in the structure thereof.
Examples of the aliphatic hydrocarbon group represented by X¹ include C1 to C221 divalent aliphatic hydrocarbon groups, such as methylene, ethylene, propylene, trimethylene, tetramethylene, hexamethylene, octamethylene, and polyoxyalkylene. A polyoxyalkylene group is preferred, from the viewpoints of easy formation of a high-molecular-weight compound, as well as the durability, flexibility, and adhesive property of the cured product. The structure of such a polyoxyalkylene group will be described in detail hereinbelow.
Examples of the alicyclic hydrocarbon group represented by X¹ include C3 to C30 divalent alicyclic hydrocarbon groups, such as cyclohexanediyl, dimethylcyclohexanediyl, dicyclohexanediyl, cyclooctanediyl, norbornanediyl, and isophoronediyl. A C3 to C12 divalent alicyclic hydrocarbon group is preferred, from the viewpoints of the heat resistance, durability, flexibility, and adhesive property of the cured product.
Examples of the aromatic hydrocarbon group represented by X¹ include C6 to C30 divalent aromatic hydrocarbon groups, such as phenylene, xylylene, toluenediyl, diphenyl ether diyl, diphenyl sulfone diyl, bis(phenoxyphenyl) sulfone diyl, phenoxybiphenyldiyl, benzophenonediyl, naphthylene, and diphenoxybenzenediyl. A C6 to C20 divalent aromatic hydrocarbon group is preferred, from the viewpoints of easy formation of a high-molecular-weight compound, as well as the heat resistance, durability, flexibility, and adhesive property of the cured product.
The organic group formed of a combination of an aliphatic hydrocarbon group, an alicyclic hydrocarbon group, and an aromatic hydrocarbon group is preferably, for example, a C13 to C20 (in total) organic group formed of a combination of an aliphatic hydrocarbon group and an aromatic hydrocarbon group, such as diphenylmethanediyl, diphenylethanediyl, diphenylpropanediyl, or benzophenonediyl.

As described above, when the diamine of formula (3) is a polyoxyalkylenediamine, the resultant thermosetting polyimide resin composition exhibits particularly favorable flexibility and adhesive property, which is preferred.
Examples of the polyoxyalkylenediamine include a polyoxypropylenediamine represented by the following formula (5), a polyoxyethylenediamine represented by the following formula (6), a polyoxybutylenediamine represented by the following formula (7), and a diamine represented by the following formula (8) or (9), which has two or more repeating units selected from the group consisting of oxyethylene, oxypropylene and oxybutylene.
Of these, a polyoxypropylenediamine represented by formula (5), a diamine represented by formula (8) or a diamine represented by formula (9) is preferred, from the viewpoints of the heat resistance, durability, flexibility, and adhesive property of the cured product. More preferred is a diamine represented by formula (8) or a diamine represented by formula (9). 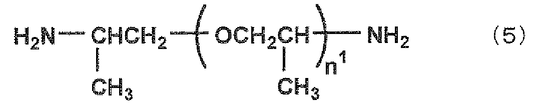 (In formula (5), n¹ represents the number of repeating units, and represents 1 to 50.) 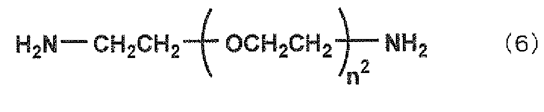 (In formula (6), n² represents the number of repeating units, and represents 1 to 100.) 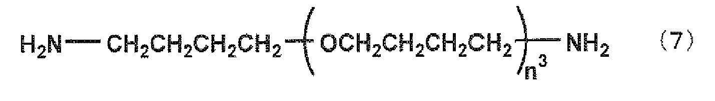 (In formula (7), n³ represents the number of repeating units, and represents 1 to 70.) 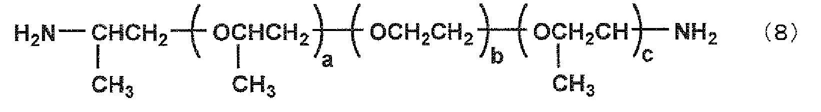 (In formula (8), each of a, b and c represents the number of repeating units, and independently represents 1 to 100.) 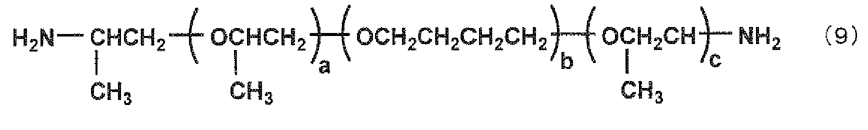 (In formula (9), each of a, b and c has the same meaning as defined above.)

The molecular weight of a polyoxypropylenediamine of formula (5) is preferably 230 to 4,000 (the number of oxypropylene repeating units (n¹) is 2.6 to 68), more preferably 600 to 2,000 (the number of oxypropylene repeating units (n¹) is 8.7 to 33).

The molecular weight of a polyoxyethylenediamine of formula (6) is preferably 300 to 4,000 (the number of oxyethylene repeating units (n²) is 5.5 to 89.5), more preferably 600 to 2,000 (the number of oxyethylene repeating units (n²) is 12.3 to 44.1).

The molecular weight of a polyoxybutylenediamine of formula (7) is preferably 200 to 4,000 (the number of oxybutylene repeating units (n³) is 1.6 to 54.3), more preferably 600 to 2,000 (the number of oxybutylene repeating units (n³) is 7.1 to 26.6).

From the viewpoints of the heat resistance, durability, flexibility, and adhesive property of the cured product, a polyoxyalkylenediamine of formula (8) or (9) preferably has a molecular weight as described below. The molecular weight of a polyoxyalkylenediamine of formula (8) is preferably 300 to 4,000 [the total number of oxypropylene repeating units (a + c) is 1 to 9.4 (c ≠ 0), and the number of oxyethylene repeating units (b) is 3.7 to 79.8], more preferably 600 to 2,000 [the total number of oxypropylene repeating units (a + c) is 2 to 6 (c # 0), and the number of oxyethylene repeating units (b) is 9 to 38.7].

The molecular weight of a polyoxyalkylenediamine of formula (9) is preferably 300 to 4,000 [the total number of oxypropylene repeating units (a + c) is 1 to 58 (c ≠ 0), and the number of oxybutylene repeating units (b) is 3 to 34], more preferably 700 to 2,000 [the total number of oxypropylene repeating units (a + c) is 3 to 24 (c ≠ 0), and the number of oxybutylene repeating units (b) is 6 to 17].

Specific examples of the diamine of formula (3) (other than the aforementioned polyoxyalkylenediamines) include an aliphatic diamine and an aromatic diamine, which are described below.
Examples of the aliphatic diamine include 4,4'-diaminodicyclohexylmethane, isophoronediamine, ethylenediamine, tetramethylenediamine, norbornanediamine, p-xylylenediamine, 1,3-bis(aminomethyl)cyclohexane, 1,3-diaminocyclohexane, hexamethylenediamine, m-xylylenediamine, 4,4'-methylenebis(cyclohexylamine), bicyclohexyldiamine, and siloxanediamines.
Examples of the aromatic diamine include 3,4'-diaminodiphenyl ether, 4,4'-diaminodiphenyl ether, 4,4'-diaminodiphenylmethane, 4,4'-diaminodiphenyl sulfone, m-phenylenediamine, p-phenylenediamine, 2,4-toluenediamine, diaminobenzophenone, 2,6-diaminonaphthalene, 1,5-diaminonaphthalene, 1,4-bis(4-aminophenoxy)benzene, 1,3-bis(4-aminophenoxy)benzene, 1,3-bis(3-aminophenoxy)benzene, 4,4'-bis(4-aminophenoxy)biphenyl, α,α'-bis(3-aminophenyl)-1,4-diisopropylbenzene, bis[4-(4-aminophenoxy)phenyl] sulfone, bis[4-(3-aminophenoxy)phenyl] sulfone, α,α'-bis(4-aminophenyl)-1,4-diisopropylbenzene, and 2,2-bis(4-aminophenoxyphenyl)propane.
These diamines may be employed singly or in combination of two or more species.

### (Production method for thermosetting polyimide resin composition and cured product (adhesive))

The thermosetting polyimide resin composition and cured product (adhesive) of the present invention are produced through a method including the following processes I to III: process I:
a process of producing a polyimide (component (a)) or an organic solvent solution of the polyimide through reaction between any of the aforementioned tetracarboxylic acid components and any of the aforementioned diamines;
   process II:
   a process of producing a thermosetting polyimide resin composition by mixing the polyimide (component (a)) with a maleimide composition (component (b)) and optionally with an organic solvent; and
   process III:
   a process of producing a cured product (adhesive) through curing (or thermal cross-linking) of the thermosetting polyimide resin composition.

Processes I to III will next be described in sequence.

### (Process I)

The polyimide (component (a)) preferably has a number average molecular weight (measured through high performance liquid chromatography, as reduced to polystyrene) of 3,000 to 10,000, more preferably 3,000 to 7,000. Production of the polyimide from any of the aforementioned tetracarboxylic acid components and any of the aforementioned diamines may be carried out through, for example, (1) solution polymerization, (2) a method in which a polyamic acid solution is prepared, and a film is formed from the solution, followed by imidization, or (3) a method involving solid-phase polymerization of a salt (e.g., half-ester salt) or an imide oligomer. Alternatively, production of the polyimide may be carried out through any conventionally known method. These methods may be employed in combination.
Reaction between a tetracarboxylic acid component and a diamine may be carried out in the presence of a known catalyst; for example, a salt formed of a mineral acid (e.g., hydrochloric acid, nitric acid, or phosphoric acid) and a weak base (e.g., pyridine, triethylamine, or trimethylenediamine); an organic acid such as benzoic acid, methylbenzoic acid, acrylic acid, crotonic acid, cinnamic acid, or terephthalic acid; or a tertiary amine. Preferably, reaction between a tetracarboxylic acid component and a diamine is carried out while performing dehydration by means of a known dehydrating agent (e.g., an acid anhydride) or a Dean-Stark apparatus. Examples of the acid anhydride include aliphatic acid anhydrides such as acetic anhydride, propionic anhydride, and trifluoroacetic anhydride; and aromatic acid anhydrides such as benzoic anhydride.

Of these methods, solution polymerization is preferred, from the viewpoint that a polyimide or an organic solvent solution of the polyimide can be directly produced. More preferred is a solution polymerization method including the following processes (A) to (D).
(A) A mixture containing a diamine and optionally an organic solvent (and optionally a catalyst) is stirred preferably at 10 to 600 rpm, to thereby prepare a uniform solution; the solution is maintained preferably at 20 to 90°C; and a tetracarboxylic acid component and optionally a catalyst are added to the solution. (A') Alternatively, a mixture containing a tetracarboxylic acid component, an organic solvent, and optionally a catalyst is stirred preferably at 10 to 600 rpm, to thereby prepare a uniform solution; the solution is maintained preferably at 20 to 90°C; and a diamine and optionally an organic solvent (and optionally a catalyst) are added to the solution.
(B) After completion of process (A) or (A'), the solution is heated preferably to 160 to 230°C (more preferably to 180 to 205°C) over preferably 0.1 to 6 hours. While components discharged to the outside of the reaction system are collected, the temperature of the reaction mixture is maintained almost constant for preferably 0.5 to 24 hours (more preferably 2 to 12 hours).
(C) After completion of process (B), this process is optionally carried out.
   The temperature of the reaction mixture is adjusted to a level equal to or lower than the temperature of the mixture which has been maintained constant in process (B); an aromatic diamine is added so that the end of the polymer molecule is provided with the aromatic amine for improvement of pot life; and the temperature of the resultant mixture is adjusted preferably to 160 to 230°C (more preferably to 180 to 205°C) over preferably 0.1 to 6 hours. While components discharged to the outside of the reaction system are collected, the temperature of the mixture is maintained almost constant for preferably 0.5 to 24 hours (more preferably 2 to 12 hours).
(D) An organic solvent is optionally added to the mixture, and the resultant mixture is cooled to a temperature suitable for handling (preferably about 5 to about 30°C), followed by termination of stirring.

Examples of the solvent which may be employed in solution polymerization for production of the polyimide include tertiary amine compounds; for example, aliphatic tertiary amines such as trimethylamine, triethylamine, tripropylamine, and tributylamine; alcohol amines such as triethanolamine, N,N-dimethylethanolamine, and N,N-diethylethanolamine; aliphatic tertiary diamines such as triethylenediamine; and nitrogen-containing heterocyclic aromatic compounds such as N-methylpyrrolidine, N-ethylpyrrolidine, N-methylpiperidine, N-ethylpiperidine, β-picoline, γ-picoline, lutidine, imidazole, pyridine, quinoline, and isoquinoline. When a catalyst is employed, the amount of the catalyst is preferably 0.001 to 1 mol, more preferably 0.01 to 0.1 mol, on the basis of 1 mol of the tetracarboxylic acid component.

Production of the polyimide may be carried out in the absence of a solvent or in the presence of an organic solvent. Examples of the organic solvent include high-boiling-point organic solvents such as N,N-dimethylacetamide, N-methyl-2-pyrrolidone, N,N-dimethylformamide, dimethyl sulfoxide, hexamethylphosphoramide, and tetramethylene sulfone; alcohols such as methanol, ethanol, 1-propanol, and 2-propanol; and ethers such as tetrahydrofuran and 1,3-dioxolane. These organic solvents may be employed singly or in combination of two or more species. Of these organic solvents, N-methyl-2-pyrrolidone or N,N-dimethylacetamide is preferred.
Xylene or toluene may be employed in combination with such an organic solvent for carrying out azeotropic dehydration.

### (Process II)

The thermosetting polyimide resin composition of the present invention is produced by mixing the polyimide or an organic solvent solution of the polyimide, which has been produced in process I, with a maleimide composition and optionally an organic solvent and an additive.
Production of the thermosetting polyimide resin composition may be carried out through a method in which all the necessary components are mixed together at one time; or a method in which a solution containing the polyimide and an organic solvent solution containing a maleimide composition are prepared separately, and the polyimide-containing solution and the maleimide-composition-containing solution are mixed together immediately before use. In some cases, when all the necessary components are mixed together at one time, the viscosity of the resultant mixture may increase within a short period of time, resulting in difficult handling. In such a case, the latter method is preferably employed.
Mixing may be carried through any conventionally known method; for example, a method employing a stirring blade or a dissolver, or a method utilizing centrifugal force.
No particular limitation is imposed on the temperature during mixing. However, the temperature is preferably room temperature (about 20°C) to about 80°C, from the viewpoints of dissolution within a short period of time, as well as easy handling.
Mixing may be carried out in air. However, more preferably, mixing is carried out in a dry air atmosphere or under a stream of an inert gas such as nitrogen.

The maleimide composition (component (b)) employed in the present invention contains at least one polymaleimide compound represented by any of the following formulas (4-1) to (4-3). 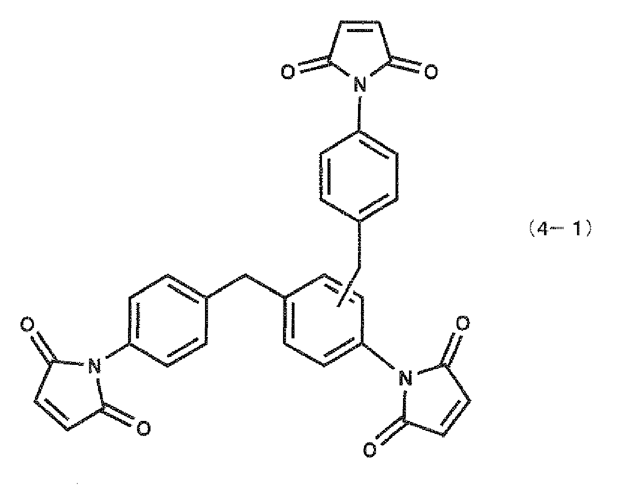 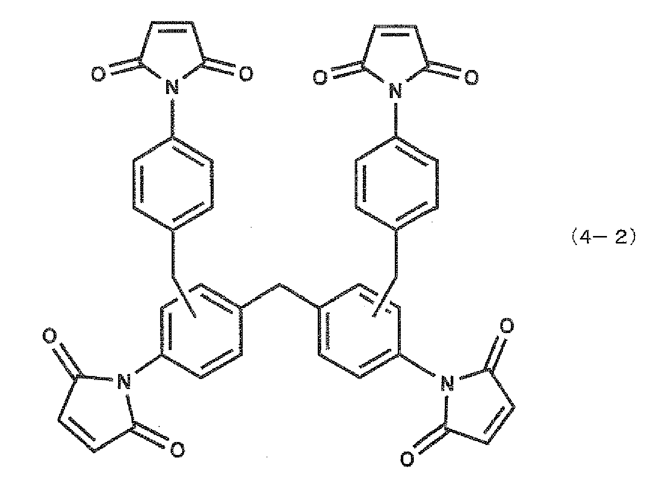 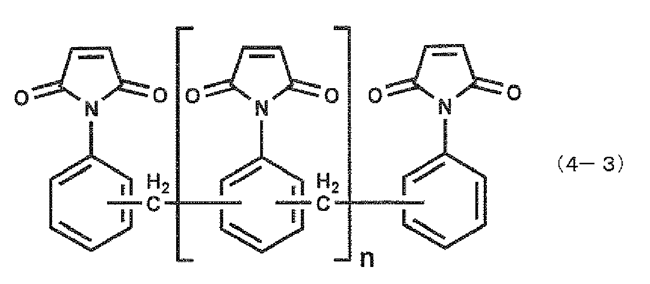 (In formula (4-3), n is an integer from 1 to 10.)

Polymaleimide compounds represented by any of formulas (4-1) to (4-3) may be employed singly or in combination of two or more species.
Examples of the product containing a maleimide compound represented by formula (4-1) or (4-2) include "BMI-2300" (product of Daiwakasei Industry Co., Ltd.).
Preferably, such a polymaleimide compound is employed in combination with a bismaleimide compound. The bismaleimide compound employed may be a known one. Specific examples include N,N'-(4,4'-diphenylmethane)bismaleimide, N,N'-(4,4'-diphenyloxy)bismaleimide, N,N'-(4,4'-diphenyl sulfone)bismaleimide, N,N'-p-phenylenebismaleimide, N,N'-m-phenylenebismaleimide, N,N'-2,4-tolylenebismaleimide, N,N'-2,6-tolylenebismaleimide, N,N'-ethylenebismaleimide, N,N'-hexamethylenebismaleimide, N,N'-{4,4'-[2,2'-bis(4",4"-phenoxyphenyl)isopropylidene]}bismaleimide, N,N'-{4,4'-[2,2'-bis(4",4"'-phenoxyphenyl)hexafluoroisopropylidene]}bismaleimide, N,N'-[4,4'-bis(3,5-dimethylphenyl)methane]bismaleimide, N,N'-[4,4'-bis(3,5-diethylphenyl)methane]bismaleimide, N,N'-[4,4'-(3-methyl-5-ethylphenyl)methane]bismaleimide, N,N'-[4,4'-bis(3,5-diisopropylphenyl)methane]bismaleimide, N,N'-(4,4'-dicyclohexylmethane)bismaleimide, N,N'-p-xylylenebismaleimide, N,N'-m-xylylenebismaleimide, N,N'-(1,3-dimethylenecyclohexane)bismaleimide, and N,N'-(1,4-dimethylenecyclohexane)bismaleimide. Of these, N,N'-(4,4'-diphenylmethane)bismaleimide is preferred, from the viewpoints of the heat resistance, durability, flexibility, and adhesive property of the cured product.

The bismaleimide compound employed may be a polyoxyalkylenediamine whose both ends are capped with maleic anhydride.
For example, the bismaleimide compound employed may be a bismaleimide compound formed of polyoxyethylenediamine whose both ends are capped with maleic anhydride, a bismaleimide compound formed of polyoxypropylenediamine whose both ends are capped with maleic anhydride, or a bismaleimide compound formed of polyoxybutylenediamine whose both ends are capped with maleic anhydride. Of these, N,N'-(4,4'-diphenylmethane)bismaleimide or N,N'-[4,4'-bis(3-methyl-5-ethylphenyl)methane]bismaleimide is preferred.

The amount of the polymaleimide compound(s) contained in the maleimide composition, the polymaleimide compound(s) being represented by any of formulas (4-1) to (4-3), is preferably 1 to 50 mass%, more preferably 1 to 30 mass%, much more preferably 2 to 15 mass%, particularly preferably 3 to 10 mass%, from the viewpoints of the heat resistance, durability, flexibility, and adhesive property of the cured product.

The thermosetting polyimide resin composition of the present invention may contain an organic solvent. Examples of the organic solvent include high-boiling-point organic solvents such as N,N-dimethylacetamide, N-methyl-2-pyrrolidone, N,N-dimethylformamide, dimethyl sulfoxide, hexamethylphosphoramide, and tetramethylene sulfone; alcohols such as methanol, ethanol, 1-propanol, and 2-propanol; and ethers such as tetrahydrofuran and 1,3-dioxolane. These organic solvents may be employed singly or in combination of two or more species.
When the thermosetting polyimide resin composition of the present invention contains an organic solvent, the nonvolatile content of the composition is adjusted to preferably 65 to 90 mass%, more preferably 70 to 85 mass%, much more preferably 75 to 85 mass%, from the viewpoints of the heat resistance, durability, flexibility, and adhesive property of the cured product. Thus, the nonvolatile content of the thermosetting polyimide resin composition of the present invention can be increased, as compared with the case of a conventionally known thermosetting polyimide resin composition. Therefore, the cured product produced from the thermosetting polyimide resin composition of the present invention generates a small amount of decomposition gas even when heated to 250°C, and exhibits high heat resistance, high durability, favorable flexibility, and favorable adhesive property.

The thermosetting polyimide resin composition of the present invention may contain any conventionally known additive, such as a surfactant, a filler, a colorant, a thixotropy-imparting agent, a flame retardant, or a UV absorbent, so long as the original performance of the composition is not impaired.
Examples of the surfactant include fluorine-containing surfactants and polysiloxane surfactants. When a surfactant is incorporated into the thermosetting polyimide resin composition, a cured product exhibiting favorable surface smoothness is readily produced from the composition. Examples of the filler include inorganic substances such as aluminum hydroxide and calcium carbonate. Examples of the colorant include inorganic pigments and organic pigments. Examples of the thixotropy-imparting agent include silica. Examples of the flame retardant include phosphoric acid esters.
For the purpose of improving heat resistance, the thermosetting polyimide resin composition of the present invention may further contain a quinone compound such as hydroquinone, methylhydroquinone, methoxyhydroquinone, t-butylhydroquinone, or p-benzoquinone; a thioether compound such as "ADK Stab (registered trademark) AO-412S" (trade name, product of Adeka Corporation) or "ADK Stab (registered trademark) AO-503" (trade name, product of Adeka Corporation); a phenolic compound such as "Sumilizer (registered trademark) GA-80" (trade name, product of Sumitomo Chemical Co., Ltd.), "IRGANOX (registered trademark) 1010" (trade name, product of Ciba Specialty Chemicals), "IRGANOX (registered trademark) 1098" (trade name, product of Ciba Specialty Chemicals), or "ADK Stab (registered trademark) AO-20" (trade name, product of Adeka Corporation); an amine compound such as "ADK Stab (registered trademark) LA-57" (trade name, product of Adeka Corporation); a sulfur-containing compound such as dilauryl 3,3'-thiodipropionate; or a phosphorus-containing compound such as "ADK Stab (registered trademark) HP-10" (trade name, product of Adeka Corporation) or "ADK Stab (registered trademark) PEP-36" (trade name, product of Adeka Corporation).

The thermosetting polyimide resin composition of the present invention may further contain a small amount of water. From the viewpoints of the heat resistance, durability, flexibility, and adhesive property of the cured product, the amount of water is preferably 5 mass% or less, more preferably 3 mass% or less, much more preferably 1 mass% or less, particularly preferably substantially zero, on the basis of the entire amount of the thermosetting polyimide resin composition.

### (Process III)

The cured product or adhesive of the present invention is produced through thermal curing or thermal cross-linking of the thermosetting polyimide resin composition.
Firstly, the thermosetting polyimide resin composition is applied to a plate-like base formed of glass or a metal (e.g., stainless steel or aluminum), a commercially available polyimide film (e.g., Kapton (trade name), Apical (trade name), or Upilex (trade name)), or any other conventionally known film-like base, to thereby form a film of the composition. No particular limitation is imposed on the technique for application of the composition, and application may be carried out through a conventionally known technique, such as die coating, comma coating, curtain coating, gravure coating, roll coating, spray coating, spin coating, or ink jetting.

Thereafter, heating is carried out at preferably 150 to 260°C, more preferably 180 to 250°C, much more preferably 200 to 240°C. In the case where an organic solvent is employed, during heating, the organic solvent is removed (through evaporation) while curing reaction (cross-linking reaction) occurs. When the heating temperature falls within the above range, there can be prevented occurrence of adhesive remaining, which would otherwise occur upon removal of an object adhering to a cured product (adhesive) produced from the thermosetting polyimide resin composition, resulting from cohesive failure of an adhesive layer, which is caused by both insufficient strength of the cured product (due to insufficient curing of the composition) and adhesive force exerted by the cured product itself. In addition, when the heating temperature falls within the above range, the curing time can be readily controlled.
The curing time may vary with the heating temperature. For sufficient curing, when the heating temperature is, for example, 150°C, the curing time is preferably about 0.1 to about 12 hours, more preferably 0.1 to 10 hours, whereas when the heating temperature is 260°C, the curing time is preferably about 0.01 to about 2 hours.
The cured product produced on the base through thermal curing (thermal cross-linking) may be employed as is (i.e., in the state where the cured product remains on the base), or may be removed from the base and employed in the form of film.
The thickness of the cured product is preferably 0.01 to 2,000 µm.

The cured product of the present invention exhibits adhesive property and serves as a material so-called "adhesive." Conceivably, the cured product (adhesive) has a three-dimensional network structure formed through reaction (via Michael addition) of one amino group of any of the aforementioned diamines with one or two maleimide skeletons contained in the maleimide composition.
Generally, an adhesive is required to have a 90° peel adhesive force of about 0.001 to about 250 N/25 mm as measured through the method described in the Examples hereinbelow, and is desirably employed repeatedly. The appropriate adhesive force of an adhesive and the number of times that the adhesive can be used repeatedly are not unequivocally determined, since they may vary with the properties, intended use, or usage of an object which is caused to adhere to the adhesive. The adhesive of the present invention exhibits a 90° peel adhesive force of about 0.1 to about 10 N/25 mm.
As used herein, "adhesive remaining" refers to a state where, when an object adhering to an adhesive is removed from the adhesive, the adhesive remains on the surface of the object. Also, as used herein, "adhesive removability" refers to the degree of difficulty in adhesive remaining.
Generally, the adhesive is required to exhibit favorable adhesive removability.

The adhesive cured product of the thermosetting polyimide resin composition of the present invention has heat resistance and flexibility, and exhibits adhesive property, etc. at high temperature. Therefore, the cured product can be employed as a heat-resistant adhesive which is required to exhibit flexibility and adhesive property at high temperature, and can be employed in a wide variety of industrial products (including an adhesive tape).

### Examples

The present invention will next be described in detail by way of examples, which should not be construed as limiting the invention thereto.
Thermogravimetry and determination of solution viscosity, 90° peel adhesive force, adhesive removability, and amino group concentration were carried out through the below-described methods.

### (Solution viscosity)

Solution viscosity was measured at 25°C by means of a cone-plate viscometer (model: TV-20, product of Tokimec, Inc.).

### (Amino group concentration)

The amino group concentration (meq/g) of a sample was determined on the basis of the total amine value as measured according to JIS K7237.

### (Thermogravimetry)

By means of a thermogravimetric apparatus "DTG-50" (product of Shimadzu Corporation), the temperature of a sample was elevated from room temperature at a rate of 10 degrees (°C)/min under a stream of nitrogen, and maintained at 200°C for 30 minutes. After removal of water, the temperature was elevated from 200°C to 250°C at a rate of 5 degrees (°C)/min. Thereafter, the temperature was maintained at 250°C for one hour, and the percent weight loss (wt.%) of the sample maintained at 250°C was determined.

### (90° peel adhesive force)

The 90° peel adhesive force of a sample was determined according to JIS Z0237.
Specifically, a polyimide film "Kapton 200H" (model number: 22M11P0860, product of Du Pont-Toray Co., Ltd.) (width: 10 mm, length: 150 mm, thickness: 50 µm) was attached to a film of a cured product formed on an aluminum plate, and these films were pressure-bonded to each other by means of one reciprocation cycle of a 2-kg rubber roller. The thus-bonded films were allowed to stand for 30 minutes, and then the Kapton 200H film was peeled off at 90° with respect to the cured product at a peeling rate of 300 mm/min at 23°C/50% RH. The 90° peel adhesive force (N/10 mm) between the cured product and the Kapton 200H film was measured and converted into units of N/(25 mm).
There were employed, as measuring apparatuses, Digital Force Gauge ZP-5N (product of Imada Co., Ltd.), a slide-type motorized stand MX-500N (product of Imada Co., Ltd.), and a 90° peeling jig P90-200N (product of Imada Co., Lid.).

### (Adhesive removability)

For evaluation of adhesive removability, the surface of the Kapton 200H film (i.e., adhesion object) was visually observed upon measurement of the aforementioned 90° peel adhesive force. When adhesive remaining did not occur, the cured product was evaluated as having favorable adhesive removability, whereas when adhesive remaining occurred, the cured product was evaluated as having poor adhesive removability.

### Synthesis Example 1

### <Synthesis of polyimide (a1)>

1,2,4,5-Cyclohexanetetracarboxylic dianhydride (HPMDA, product of Mitsubishi Gas Chemical Company, Inc.) (58.520 g, 0.261 mol) and ethylene oxide-propylene oxide copolymer bis(2-aminopropyl) ether (trade name: Jeffamine ED-900, product of Mitsui Fine Chemical Inc., molecular weight: 966.6 (calculated from amine value), in formula (8), a + c = 2.5 (theoretical value), b = 15.5 (theoretical value)) (315.418 g, 0.326 mol) were added to a 500-mL five-neck round-bottom flask equipped with a thermometer, a stirrer, a nitrogen feed tube, a dropping funnel having a side tube, a Dean-Stark apparatus, and a cooling tube under a stream of nitrogen at 70°C. The resultant mixture was heated to 200°C with stirring at 200 rpm, and imidization reaction was carried out for three hours. The thus-produced water (9.30 g) was separated by means of the Dean-Stark apparatus.
Three hours later, termination of distillation of water was confirmed, and then the residual liquid was cooled to ambient temperature, to thereby produce a liquid-form polyimide (a1) at 25°C. The polyimide (a1) was found to have a number average molecular weight (as measured through high-performance liquid chromatography) of 4,600 as reduced to polystyrene, a solution viscosity of 53 Pa·s, and an amino group concentration of 0.43 meq/g.

### Preparation Example 1

### <Preparation of organic solvent solution (solution B1) containing maleimide composition (b1)>

A maleimide composition (trade name: BMI-2300, product of Daiwa Fine Chemicals Co., Ltd.) (37.38 g) and 1,3-dioxolane (100 g) were added to a 500-mL five-neck flask equipped with a thermometer, a stirrer, a nitrogen feed tube, a dropping funnel having a side tube, a Dean-Stark apparatus, and a cooling tube under a stream of nitrogen, and the resultant mixture was stirred at room temperature for one hour for complete dissolution, to thereby prepare a solution B1.

### Example 1

### <Production of thermosetting polyimide resin composition 1 and cured product 1 thereof>

The entire amount of the polyimide (a1) produced in Synthesis Example 1 (solution A) and the entire amount of the solution B1 prepared in Preparation Example 1 were added to a 500-mL five-neck flask equipped with a thermometer, a stirrer, a nitrogen feed tube, a dropping funnel having a side tube, and a cooling tube under a stream of nitrogen, and the resultant mixture was stirred at room temperature (25°C) for one hour for complete dissolution, to thereby produce a thermosetting polyimide resin composition 1 containing 1,3-dioxolane (100% as a low-boiling-point solvent) and having a nonvolatile content of 80 wt.%. In the thermosetting polyimide resin composition 1, the amount of BMI-2300 (i.e., maleimide composition) is 10 parts by mass on the basis of 100 parts by mass of the polyimide (a1).

Subsequently, the thermosetting polyimide resin composition 1 was applied to an aluminum plate (150 mm x 150 mm, thickness: 1 mm) placed on a hot plate maintained at 80°C so that the thickness of the thus-applied composition was adjusted to 0.375 mm, and the composition-applied plate was allowed to stand for 30 minutes for removal of volatile components. Then, the resultant product was placed in a hot-air dryer maintained at 220°C, and allowed to stand for 10 minutes for curing, to thereby produce an adhesive cured product 1 of the thermosetting polyimide resin composition 1 having a relatively large thickness of 0.300 mm.

The adhesive cured product of the thermosetting polyimide resin composition 1 was found to have a 90° peel adhesive force of 2.56 (N/25 mm) and exhibited favorable adhesive removability. Furthermore, the test for determining 90° peel adhesive force was repeated (total: 5 cycles) at the same portion of the adhesive cured product of the thermosetting polyimide resin composition 1. The 90° peel adhesive force at the fifth cycle was 2.36 (N/25 mm). The cured product exhibited favorable adhesive removability. Thus, the cured product underwent virtually no change in adhesive property even when adhesion and peeling were repeated; i.e., the cured product exhibited excellent durability.

The adhesive cured product of the thermosetting polyimide resin composition 1 was removed from the aluminum plate by means of a scraper, and the cured product was shown to be a flexible film. The adhesive cured product of the thermosetting polyimide resin composition 1 was immersed in dimethylacetamide (DMAC) and then dried for determining weight loss. As a result, the cured product was found to undergo virtually no weight loss, and to contain virtually no uncured components.
In addition, the adhesive cured product of the thermosetting polyimide resin composition 1 was subjected to thermogravimetry. The cured product was found to undergo slight weight loss (i.e., the percent weight loss was 1.15 wt.% through one-hour heating at 250°C).

### Synthesis Example 2

### <Synthesis of polyimide (a2)>

1,2,4,5-Cyclohexanetetracarboxylic dianhydride (HPMDA, product of Mitsubishi Gas Chemical Company, Inc.) (54.608 g, 0.244 mol) and butylene oxide-propylene oxide copolymer bis(2-aminopropyl) ether (trade name: Jeffamine XTJ-542, product of Mitsui Fine Chemical Inc., molecular weight: 1,046.6 (calculated from amine value), in formula (9), a + c = 6.0 (theoretical value), b = 9.0 (theoretical value)) (318.691 g, 0.305 mol) were added to an apparatus similar to that employed in Synthesis Example 1 under a stream of nitrogen at 70°C. The resultant mixture was heated to 200°C with stirring at 200 rpm, and imidization reaction was carried out for three hours. The thus-produced water (8.3 g) was separated by means of the Dean-Stark apparatus. Three hours later, termination of distillation of water was confirmed, and then the residual liquid was cooled to ambient temperature, to thereby produce a liquid-form polyimide (a2) at 25°C. The polyimide (a2) was found to have a number average molecular weight (as measured through high-performance liquid chromatography) of 4,500 as reduced to polystyrene, a solution viscosity exceeding the measurement limit (170 Pa·s), and an amino group concentration of 0.44 meq/g.

### Preparation Example 2

### <Preparation of organic solvent solution (solution B2) containing maleimide composition (b2)>

A maleimide composition (trade name: BMI-2300, product of Daiwa Fine Chemicals Co., Ltd.) (35.48 g) and 1,3-dioxolane (100 g) were added to an apparatus similar to that employed in Preparation Example 1 under a stream of nitrogen, and the resultant mixture was stirred at room temperature for one hour for complete dissolution, to thereby prepare a solution. 82.

### Example 2

### <Production of thermosetting polyimide resin composition 2 and cured product thereof>

The entire amount of the polyimide (a2) produced in Synthesis Example 2 (solution A) and the entire amount of the solution B2 prepared in Preparation Example 2 were added to an apparatus similar to that employed in Example 1 under a stream of nitrogen, and the resultant mixture was stirred at room temperature (25°C) for one hour for complete dissolution, to thereby produce a thermosetting polyimide resin composition 2 containing 1,3-dioxolane (100% as a low-boiling-point solvent) and having a nonvolatile content of 80 wt.%. In the thermosetting polyimide resin composition 2, the amount of BMI-2300 (i.e., maleimide composition) is 10 parts by mass on the basis of 100 parts by mass of the polyimide (a2).

Subsequently, the thermosetting polyimide resin composition 2 was applied to an aluminum plate (150 mm × 150 mm, thickness: 1 mm) placed on a hot plate maintained at 80°C so that the thickness of the thus-applied composition was adjusted to 0.375 mm, and the composition-applied plate was allowed to stand for 30 minutes for removal of volatile components. Then, the resultant product was placed in a hot-air dryer maintained at 220°C, and allowed to stand for 10 minutes for curing, to thereby produce an adhesive cured product of the thermosetting polyimide resin composition 2 having a relatively large thickness of 0.300 mm.

The adhesive cured product of the thermosetting polyimide resin composition 2 was found to have a 90° peel adhesive force of 4.41 N/(25 mm) and exhibited favorable adhesive removability. Furthermore, the test for determining 90° peel adhesive force was repeated (total: 5 cycles) at the same portion of the adhesive cured product of the thermosetting polyimide resin composition 2. The 90° peel adhesive force at the fifth cycle was 4.23 N/(25 mm). The cured product exhibited favorable adhesive removability. Thus, the cured product underwent virtually no change in adhesive property even when adhesion and peeling were repeated; i.e., the cured product exhibited excellent durability.

The adhesive cured product of the thermosetting polyimide resin composition 2 was removed from the aluminum plate by means of a scraper, and the cured product was shown to be a flexible film. The adhesive cured product of the thermosetting polyimide resin composition 2 was immersed in DMAC and then dried for determining weight loss. As a result, the cured product was found to undergo virtually no weight loss, and to contain virtually no uncured components.
In addition, the adhesive cured product of the thermosetting polyimide resin composition 2 was subjected to thermogravimetry. The cured product was found to undergo slight weight loss (i.e., the percent weight loss was 1.98 wt.% through one-hour heating at 250°C).

### Preparation Example 3

### <Preparation of organic solvent solution (solution B3) containing maleimide compound (b3)>

N,N'-(4,4'-Diphenylmethane)bismaleimide (i.e., a maleimide compound) (trade name: BMI-H, product of K·I Chemical Industry Co., Ltd., purity: 94.9%) (22.12 g) and 1,3-dioxolane (249 g) were added to an apparatus similar to that employed in Preparation Example 1 under a stream of nitrogen, and the resultant mixture was stirred at room temperature for one hour for complete dissolution, to thereby prepare a solution B3.

### Comparative Example 1

### <Production of thermosetting polyimide resin composition 3 and cured product thereof>

The polyimide (a1) produced in Synthesis Example 1 (solution A) (229.01 g) and the entire amount of the solution B3 prepared in Preparation Example 3 were added to an apparatus similar to that employed in Example 1 under a stream of nitrogen, and the resultant mixture was stirred at room temperature (25°C) for one hour for complete dissolution, to thereby produce a thermosetting polyimide resin composition 3 containing 1,3-dioxolane (100% as a low-boiling-point solvent) and having a nonvolatile content of 50 wt.%. In the thermosetting polyimide resin composition 3, the amount of N,N'-(4,4'-diphenylmethane)bismaleimide is 10 parts by mass on the basis of 100 parts by mass of the polyimide (a1).

Subsequently, the thermosetting polyimide resin composition 3 was applied to an aluminum plate (150 mm x 150 mm, thickness: 1 mm) placed on a hot plate maintained at 80°C so that the thickness of the thus-applied composition was adjusted to 0.5 mm, and the composition-applied plate was allowed to stand for 30 minutes for removal of volatile components. Then, the resultant product was placed in a hot-air dryer maintained at 220°C, and allowed to stand for 10 minutes for curing, to thereby produce an adhesive cured product of the thermosetting polyimide resin composition 3 having a relatively large thickness of 0.300 mm.

The adhesive cured product of the thermosetting polyimide resin composition 3 was found to have a 90° peel adhesive force exceeding 13.2 N/(25 mm); i.e., the 90° peel adhesive force failed to be measured.
The cured product exhibited poor adhesive removability.

### Preparation Example 4

### <Preparation of organic solvent solution (solution B4) containing maleimide compound (b4)>

N,N'-(4,4'-Diphenylmethane)bismaleimide (i.e., a maleimide compound) (trade name: BMI-H, product of K·I Chemical Industry Co., Ltd., purity: 94.9%, containing, as impurities, monomaleimides, dimers thereof, and maleamide compounds formed through opening of the maleimide ring, but not containing polymaleimide compounds as impurities) (35.39 g) and 1,3-dioxolane (98.20 g) were added to an apparatus similar to that employed in Preparation Example 1 under a stream of nitrogen, and the resultant mixture was stirred at room temperature for one hour, to thereby prepare a solution B4. However, insoluble matter remained in the solution.

### Comparative Example 2

### <Production of thermosetting polyimide resin composition 4 and cured product thereof>

The polyimide (a1) produced in Synthesis Example 1 (solution A) (366.41 g) and the entire amount of the solution B4 prepared in Preparation Example 4 were added to an apparatus similar to that employed in Example 1 under a stream of nitrogen, and the resultant mixture was stirred at room temperature (25°C) for one hour, to thereby produce a thermosetting polyimide resin composition 4 containing 1,3-dioxolane (100% as a low-boiling-point solvent) and having a nonvolatile content of 80 wt.%. The presence of insoluble matter in the thermosetting polyimide resin composition 4 was visually observed. In the thermosetting polyimide resin composition 4, the amount of N,N'-(4,4'-diphenylmethane)bismaleimide is 10 parts by mass on the basis of 100 parts by mass of the polyimide (a1).

Subsequently, the thermosetting polyimide resin composition 4 was applied to an aluminum plate (150 mm × 150 mm, thickness: 1 mm) placed on a hot plate maintained at 80°C so that the thickness of the thus-applied composition was adjusted to 0.375 mm, and the composition-applied plate was allowed to stand for 30 minutes for removal of volatile components. Then, the resultant product was placed in a hot-air dryer maintained at 220°C, and allowed to stand for 10 minutes for curing, to thereby produce an adhesive cured product of the thermosetting polyimide resin composition 4. Although the cured product exhibited a uniform color tone, clear irregularities were visually observed on a surface layer of the cured product; i.e., the cured product was unsuitable as an adhesive.

### Industrial Applicability

The cured product of the thermosetting polyimide resin composition of the present invention exhibits flexibility and heat resistance; for example, the cured product does not decompose even when heated to 250°C. In addition, the cured product exhibits adhesive property, etc. Therefore, the cured product can be employed as a heat-resistant adhesive which is required to exhibit flexibility and adhesive property at high temperature, and can be employed in a wide variety of industrial products (including an adhesive tape).

## Claims

1. A thermosetting polyimide resin composition comprising the following components (a) and (b):
(a) a polyimide produced through reaction between a tetracarboxylic acid component containing a tetracarboxylic dianhydride represented by the following formula (1): 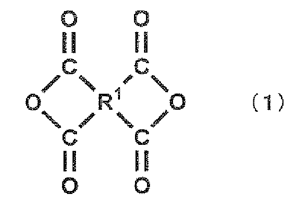 (wherein R¹ represents a C1 to C20 tetravalent chain saturated hydrocarbon group, a C2 to C20 tetravalent chain unsaturated aliphatic hydrocarbon group, a C4 to C20 tetravalent alicyclic hydrocarbon group, a C6 to C15 tetravalent aromatic hydrocarbon group, or a C13 to C20 substituted or unsubstituted aromatic-ring-containing chain saturated hydrocarbon group) and/or a tetracarboxylic acid represented by the following formula (2): 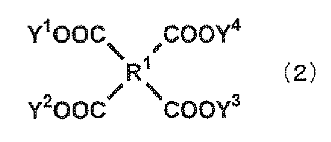 (wherein R¹ has the same meaning as defined above; and each of Y¹ to Y⁴ represents a hydrogen atom or a C1 to C8 aliphatic hydrocarbon group), and a diamine represented by the following formula (3):
H₂N-X¹-NH₂ (3)
(wherein X¹ represents a C1 to C221 divalent organic group which is formed of an aliphatic hydrocarbon group, an alicyclic hydrocarbon group, an aromatic hydrocarbon group, or a combination thereof, and which optionally includes an ether group, a sulfonyl group, or a keto group in the structure thereof); and
(b) a maleimide composition containing at least one polymaleimide compound represented by any of the following formulas (4-1) to (4-3): 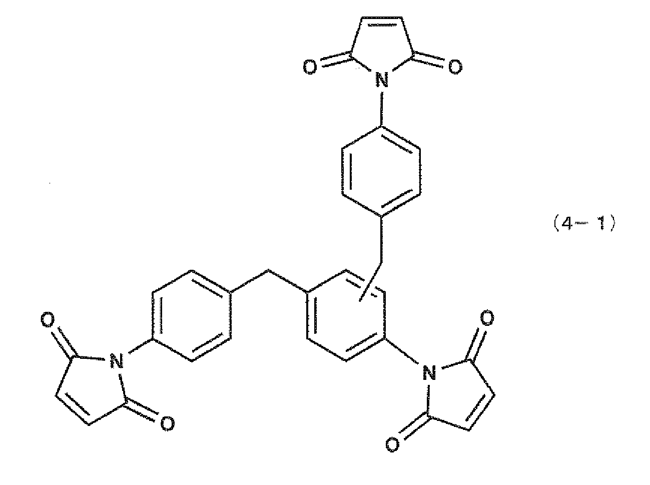 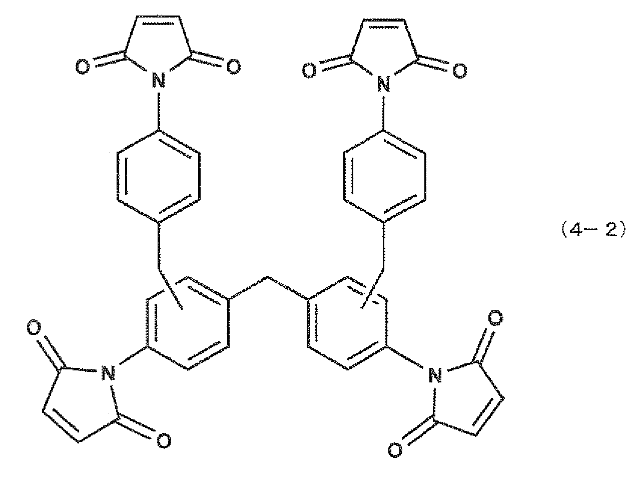 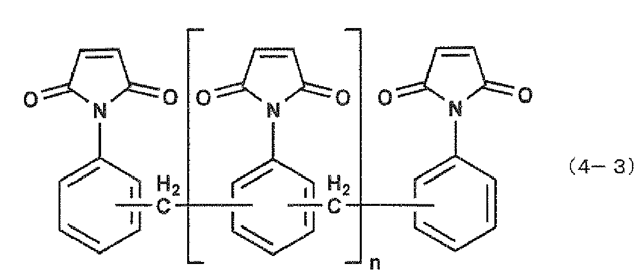 (wherein n is an integer from 1 to 10).

2. The thermosetting polyimide resin composition according to claim 1, wherein the polyimide has been produced through reaction under such a condition that the amount by mole of the diamine exceeds that of the tetracarboxylic acid component.

3. The thermosetting polyimide resin composition according to claim 1 or 2, wherein the amount of component (b) is 1 to 200 parts by mass on the basis of 100 parts by mass of component (a).

4. The thermosetting polyimide resin composition according to any of claims 1 to 3, wherein component (b) is a maleimide composition containing at least one polymaleimide compound represented by any of formulas (4-1) to (4-3) and a bismaleimide compound.

5. The thermosetting polyimide resin composition according to any of claims 1 to 4, wherein the amount of the polymaleimide compound is 1 to 50 mass% with respect to the entire amount of the maleimide composition.

6. The thermosetting polyimide resin composition according to any of claims 1 to 5, wherein the organic group represented by X¹ in formula (3) has at least one polyoxyalkylene group selected from among a polyoxyethylene group, a polyoxypropylene group, and a polyoxybutylene group.

7. The thermosetting polyimide resin composition according to any of claims 1 to 6, which further contains a solvent.

8. The thermosetting polyimide resin composition according to claim 7, which has a nonvolatile content of 65 to 90 mass%.

9. A cured product produced through thermal cross-linking of a thermosetting polyimide resin composition as recited in any of claims 1 to 8 at 150 to 260°C for 0.1 to 12 hours.

10. An adhesive produced through thermal cross-linking of a thermosetting polyimide resin composition as recited in any of claims 1 to 8 at 150 to 260°C for 0.1 to 12 hours.
